Europäisches Patentamt

European Patent Office

Office européen des brevets

(19)

(11) Publication number: 0 167 294
A1

## EUROPEAN PATENT APPLICATION

(12)

(21) Application number: 85303956.8

(22) Date of filing: 04.06.85

(51) Int. Cl.⁴: C 08 F 210/06
C 08 F 4/64

(30) Priority: 04.06.84 JP 113201/84

(43) Date of publication of application:
08.01.86 Bulletin 86/2

(84) Designated Contracting States:
BE DE FR GB IT NL

(71) Applicant: TOA NENRYO KOGYO KABUSHIKI KAISHA
1-1 Hitotsubashi, 1-Chome Chiyoda-Ku
Tokyo 100(JP)

(72) Inventor: Shimbori, Yuichi
8-5, Chuo 1-chome Nishi-ku
Yokohama-shi Kanagawa-ken(JP)

(72) Inventor: Yamada, Hiroto
1060-6, Ooaza Kamekubo Ooi-machi
Iruma-gun Saitama-ken(JP)

(72) Inventor: Izawa, Minoru
1902-5, Ooaza Kamekubo Ooi-machi
Iruma-gun Saitama-ken(JP)

(72) Inventor: Miyazaki, Makoto
4-3, Yanagi-cho
Sakado-shi Saitama-ken(JP)

(74) Representative: Northover, Robert Frank et al,
ESSO Chemical Limited Esso Chemical Research Centre
P.O. Box 1
Abingdon Oxfordshire, OX13 6BB(GB)

(54) Process for producing propylene copolymer.

(57) A process for producing a propylene copolymer containing 2 to 10 wt % of 1-butene and 0 to 4 wt % of ethylene, said process comprising copolymerizing propylene with 1-butene or copolymerizing propylene with 1-butene and ethylene in the presence of a polymerization catalyst composed of a catalyst component and an organoaluminum compound, said catalyst component being one which is obtained by treating with a chlorinated hydrocarbon having 2 or more carbon atoms and a complexing agent, a reduced solid obtained by reducing titanium tetrachloride with an organic metal compound.

EP 0 167 294 A1

'PROCESS FOR PRODUCING PROPYLENE COPOLYMER'

The present invention relates to a process for producing a copolymer composed of propylene and olefins other than propylene.

Background Technology

Film of highly crystalline polypropylene which is in general use for packaging requires a high heat-seal temperature. High heat-seal temperatures are generally undesirable since among other disadvantages, the processing apparatus can not be run at as high a speed as for polymer product having a lower heat-seal temperature. In order to reduce the heat-seal temperature, it has been attempted to produce propylene copolymers. The methods include copolymerizing propylene with ethylene or an alpha-olefin such as 1-butene or copolymerizing propylene with ethylene and an alpha-olefin. The propylene copolymer thus produced provides film improved in heat sealability. However, reduction of heat-seal temperature is accompanied by known disadvantages caused by alpha-olefin and ethylene used for copolymerization. For example, the copolymerization gives rise to a large amount of low-molecular weight amorphous polymer which fouls the machines and equipment for production. The copolymer has a low bulk density, which is undesirable for efficient operation of polymer production. The copolymer has a low stiffness. The film of the copolymer is poor in anti-blocking properties.

For the solution of these problems, there were proposed several processes for copolymerization. For example, Japanese Patent Publication No. 6643/1980 discloses a process for performing copolymerization while keeping the monomer mixture of propylene and ethylene in a certain proportion, and GB 2,027,720, GB 2,105,651 and U.S. 4,367,322 disclose a process for copolymerizing propylene and olefins so that the resulting copolymer contains propylene and olefins in a specific range. These processes substantially employ a specific polymerization catalyst and do not completely solve the above-mentioned problems (i.e. reduction of heat-seal temperature without negatively affecting bulk density, anti-blocking properties and stiffness).

Disclosure of the Invention

Object of the Invention

It is an object of the present invention to provide a process for producing a propylene copolymer which has a high bulk density and a high stiffness which can be made into film having good heat sealability and anti-blocking properties. The process of this invention is particularly advantageous since only a small amount of undesirable low-molecular weight amorphous copolymers is produced. The present inventors found that the object of this invention can be achieved by copolymerizing propylene with specific quantities of 1-butene or by copolymerizing propylene with specific quantities of 1-butene and ethylene in the presence of a specific catalyst, thereby producing a propylene copolymer of specific composition.

Summary of the Invention

The gist of this invention resides in a process for producing a propylene copolymer containing 2 to 10 wt % of 1-butene and 0 to 4 wt % of ethylene, said process comprising copolymerizing propylene with 1-butene or copolymerizing propylene with 1-butene and ethylene in the presence of a polymerization catalyst composed of a catalyst component and an organoaluminum compound, said catalyst component being one which is obtained by treating a titanium containing reduced solid obtained by reducing titanium tetrachloride with an organic metal compound with a chlorinated hydrocarbon having 2 or more carbon atoms and a complexing agent.

Polymerization Catalyst

The polymerization catalyst used in this invention is composed of a specific titanium containing catalyst component and an organoaluminum compound. The catalyst component is basically prepared by reducing titanium tetrachloride with an organometallic compound selected from organoaluminum compounds, organomagnesium compounds, and organozinc compounds, and treating the resulting reduced solid with a complexing agent and a chlorinated hydrocarbon having 2 or more carbon atoms. The treatment may be alternatively performed in the presence of titanium tetrachloride or an aluminum trichloride-ether complex. The preparation of these catalyst components is disclosed in detail in U.S. Patent No. 4,182,691, 4,321,346 and U.S. Patent No. 4,401,799 each being incorporated by reference, and GB 1594020-A and GB 1594019.

The organoaluminum compound used as the organometallic compound for the reduction of titanium tetrachloride is preferably an organoaluminum compound, which is represented by the formula $AlR_nX_{3-n}$ (where R is a $C_1$ to $C_{10}$ alkyl group or aryl group; X is a halogen atom; and $3 \geq n > 0$). Examples of this compound include

- 3 -

0167294

trialkyl aluminum such as triethyl aluminum, tributyl aluminum, and triisobutyl aluminum; dialkyl aluminum halide such as dimethyl aluminum chloride, diethyl aluminum chloride, dibutyl aluminum chloride, and diethyl aluminum bromide; alkyl aluminum dihalide such as methyl aluminum dichloride, ethyl aluminum dichloride, butyl aluminum dichloride, and ethyl aluminum dibromide; and alkyl aluminum sesquihalide such as ethyl aluminum sesquichloride. These compounds may be used in combination with one another.

The reduction of titanium tetrachloride is usually accomplished by contacting it with the organometallic compound at -50°C to +30°C for 0.5 to 3 hours in the presence of a $C_5$ to $C_{12}$ saturated aliphatic, saturated alicyclic, or aromatic hydrocarbon. The contacting may be continued further at 20 to 100°C for 1 hour. The organometallic compound is used in an amount of 1 to 5 gram atom (as metal) for 1 gram atom of titanium.

The reduced solid obtained as mentioned above is then treated with a complexing agent and a chlorinated hydrocarbon having 2 or more carbon atoms. The chlorinated hydrocarbon is one which is formed when any hydrogen atoms in a hydrocarbon having 2 or more carbon atoms are replaced with chlorine atoms, preferably 2 or more chlorine atoms. Examples of such compounds include hexachloroethane, pentachloroethane, tetrachloroethane, tetrachloroethylene, hexachloropropane, pentachloropropane, and tetrachloropropane and especially hexachloroethane.

The complexing agent employed in the treatment of the reduced solids is a compound having one or more electron donor atoms or radicals. It is selected from ethers, thioethers, thiols, organic phosphorus-containing compounds, organic nitrogen-containing compounds, ketones and esters. Examples of the ethers include diethyl ether, diisopropyl ether, dibutyl ether, diisobutyl ether, diisoamyl ether, di-2-ethylhexyl ether, arylethyl ether, diphenyl ether, anisole, chloroanisole, and dimethoxybenzene. Examples of the thioethers include diethyl thioether, dipropyl thioether, dicyclohexyl thioether, diphenyl thioether, and diaryl thioether, Examples of the organic phosphorus-containing compounds include tributyl phosphine, triphenyl phosphine, triethyl phosphite, and tributylphosphite. Examples of the organic nitrogen-containing compounds include

- 4 -

0167294

diethylamine, triethylamine, dipropylamine, aniline, and dimethylaniline. Preferable among them are ethers, particularly those which have 4 to 16 carbon atoms and especially di-n-butyl ether.

The treatment of a reduced solid with a complexing agent and a chlorinated hydrocarbon having 2 or more carbon atoms is usually accomplished by contacting the reduced solid with the complexing agent and chlorinated hydrocarbon in the presence of an inert hydrocarbon such as hexane, heptane, octane, cyclohexane, benzene, toluene, and xylene. The complexing agent and the chlorinated hydrocarbon may be used one after the other in any order; but they should preferably be used simultaneously. The contact treatment is usually carried out at 0 to 170°C for 5 minutes to 20 hours.

The complexing agent and the chlorinated hydrocarbon are used usually in an amount of 0.1 to 2.5 gram mol and 0.2 to 3.0 gram mol, respectively, for 1 gram atom of titanium in the reduced solid.

The reduced solid which has been treated as mentioned above is separated from the reaction medium and, if necessary, washed with an inert hydrocarbon. The product is used, as such or after drying, as the catalyst component in this invention.

The polymerization catalyst used in this invention is a combination of the catalyst component prepared as mentioned above and an organoaluminum compound. The organoaluminum compound is selected from the above-mentioned compounds used for the preparation of the catalyst component. Examples of the compound include triethyl aluminum, triisobutyl aluminum, diethyl aluminum chloride, diisobutyl aluminum chloride, methyl aluminum dichloride, and ethyl aluminum dichloride. Preferable among them is diethyl aluminum chloride. The organoaluminum compound is used in an amount of 1 to 100 gram mol, preferably 3 to 50 gram mol, for 1 gram atom of titanium in the catalyst component.

The polymerization catalyst may be combined with a modifier. The complexing agent used in the preparation of the catalyst component may also be used a the modifier. Examples of the modifier include saturated fatty acid esters such as ethyl acetate, butyl acetate, and butyl butyrate; unsaturated fatty acid esters such as methyl methacrylate and butyl methacrylate; aromatic carboxylic acid esters such as ethyl benzoate, ethyl methylbenzoate, and ethyl p-anisate; ethers such as dibutyl ether, diisobutyl ether, diphenyl ether, and anisole; and organic phosphorus-containing compounds such as tributyl phosphine, triphenyl phosphine, and triethyl phosphite. The modifier is used usually in an amount of 0.05 to 3 gram mol for 1 gram atom of titanium in the catalyst component.

Method of Polymerization

The composition of the resulting propylene copolymer is important in order to obtain the technical advance of this invention. It is necessary that the content of 1-butene be 2 to 10 wt % and the content of ethylene be 0 to 4 wt %. If the content of 1-butene is in excess of 10 wt % and/or the content of ethylene is in excess of 4 wt %, the resulting copolymer contains a large amount of low-molecular weight polymer, and film from such a copolymer is very poor in stiffness and anti-blocking properties. On the other hand, if the content of 1-butene is less than 2 wt %, the improvement in heat sealability is insignificant and the object of this invention is not achieved. In the case where ethylene is used, the content of it should preferably be in the range of 0.5 to 4 wt %. Furthermore, the objects of this invention are not achieved even when a copolymer of the same composition as that of this invention is produced by using a catalyst other than a low aluminum titanium catalyst such as described.

The propylene copolymer of this invention is obtained by copolymerizing propylene with 1-butene or by copolymerizing propylene with 1-butene and ethylene in the presence of the above-mentioned polymerization catalyst. The copolymerization is accomplished usually in an inert hydrocarbon such as propane, butane, pentane, hexane, heptane, octane, cyclohexane, benzene, toluene, and xylene, or in the liquid monomer, particularly liquid propylene. The best result is obtained when bulk polymerization is performed in the liquid monomer.

The amounts of 1-butene and ethylene used in copolymerization vary depending on the amount of polymerization catalyst used and the polymerization conditions. The polymerization is performed usually in one step, but may be performed in two or more steps, as the case may be, using the same polymerization vessel or using two or more polymerization vessels. The polymerization may be performed batchwise or continuously, usually under normal pressure or under pressure up to 50 kg/cm$^2$, at 50 to 150°C for 10 minutes to 20 hours. It is possible to adjust the molecular weight of the polymer by using a molecular weight modifier such as hydrogen.

The copolymer obtained as mentioned above undergoes the known post-treatment such as catalyst removal, washing, and drying.

Effect of the Invention

The propylene copolymer obtained according to the process of this invention has the following features. The content of low-molecular weight and amorphous polymer is low, and the bulk density is high. The copolymer can be made into film which is superior in heat sealability, anti-blocking properties, and stiffness.

The invention is now described in more detail with reference to the following examples and comparative examples, in which "%" means "% by weight", unless otherwise specified. The physical properties of the copolymer were measured according to the following methods.

For the measurement of melt index (MI), contents of 1-butene and ethylene, bulk density, and n-hexane insolubles (HS), the resulting copolymer was used as such. For the measurement of other physical properties, a 25-μm thick film was used which was formed by T-die extrusion at a die temperature of 240°C from the copolymer pellets incorporated with butylated hydroxytoluene, silica, and erucic acid amide.

MI ... ASTM D-1238

Contents of 1-butene and ethylene ... $^{13}$C NMR

Bulk density ... ASTM D-1895-65, Method A

HS ... Extraction with boiling n-hexane for 6 hours in a Soxhlet extractor

Heat seal temperature ... The temperature that affords the maximum peel strength of 300 g/15 mm when heat sealing of two films is performed under a pressure of 2 kg/cm$^2$ for 1 second. The sealed film sample, 15 mm wide, is peeled at a peel rate of 500 mm/min and at a peel angle of 180° on a tensile tester made by Toyo Seiki Co. The heat sealer is a homemade one.

Anti-blocking properties ... Expressed in terms of the maximum force $(g/cm^2)$ required to separate two sheets of film which have been allowed to stand for one day under a load of 2080 g/10 $cm^2$ at 50°C. The force is measured with a slip tester designed for measuring the coefficient of static friction.

Stiffness ... ASTM D-882

Example 1

Preparation of Catalyst Component

In a 20-liter autoclave equipped with a stirrer were placed 7 liters of purified heptane and 2.5 liters of titanium tetrachloride. The reaction system was cooled to 0°C. While the reaction system was kept at 0°C, a mixture composed of 3.15 liters of diethyl aluminum chloride, 1.17 liters of ethyl aluminum dichloride, and 4 liters of purified heptane was added dropwise over a period of 3 hours. The contents in the autoclave were heated with stirring. One hour later, the temperature was 65°C, stirring was continued for 1 hour at this temperature. The reduced solid thus obtained was separated and washed with purified heptane, followed by drying under reduced pressure.

In 1 liter of purified heptane was suspended 250 g of the reduced solid. To this suspension were added 1 gram mol of hexachlorethane (in the form of heptane solution) and 0.6 gram mol of di-n-butyl ether for 1 gram atom of titanium in the reduced solid, followed by stirring at 80°C for 5 hours. The resulting solid substance was washed with purified heptane and then dried under reduced pressure. Thus there was obtained the catalyst component.

Production of Propylene Copolymer

Into a 100-liter autoclave equipped with a stirrer were continuously introduced the catalyst component (1.0 g/h), diethyl aluminum chloride (20.0 g/h, 30 gram mol for 1 gram atom of titanium in the catalyst component), methyl methacrylate (0.35 g/h, 0.6 gram mol for 1 gram atom of titanium in the catalyst component), liquid propylene (20 kg/h), 1-butene (1.78 kg/h), and ethylene (0.31 kg/h) under the presence of hydrogen (1.5 mol% in the gas phase). Copolymerization was carried out at 60°C.

The reaction product was continuously discharged. The catalyst remaining in it was deactivated by adding a small amount of isopropanol, and the reaction product was thoroughly washed with liquid propylene, followed by drying. Thus there was obtained propylene copolymer powder at a rate of 10 kg/h. The physical properties of the copolymer and the film produced therefrom are shown in Table 1.

Examples 2 to 6 and Comparative Examples 1 to 3

Copolymerization reaction was performed in the same way as in Example 1 except that the feedrates of propylene, 1-butene, and ethylene and the quantity of hydrogen gas were changed. The physical properties of the resulting propylene copolymer are shown in Table 1.

It is noted that the copolymers having the composition as specified in this invention have good physical properties, but the object of this invention is not achieved when the composition is outside the specified range.

Example 7

Copolymerization of propylene with 1-butene was performed in the same way as in Example 1 except that ethylene was not supplied. The physical properties of the resulting propylene copolymer are shown in Table 1.

Comparative Examples 4 and 5

Copolymerization was performed in the same way as in Example 1 except that the feed rates of propylene, 1-butene, and ethylene and the quantity of hydrogen gas were changed and the catalyst component was replaced with a commercial catalyst ("TAC-184" made by Toho Titanium Co., prepared by activating AA-type titanium trichloride catalyst) at a rate of 14 g/h. The physical properties of the resulting propylene copolymers are shown in Table 1.

Comparative Example 6

Preparation of Catalyst Component

A catalyst component was prepared according to the process described in GB 2,027,720 and GB 2,105,651.

Into a 20-liter reactor, with the atmosphere therein replaced with nitrogen, were introduced 4 liters of purified hexane and 1 liter of titanium tetrachloride. The solution was kept at -5°C. To this solution was added dropwise a solution composed of 3 liters of purified hexane and 2.32 liters of ethyl aluminum sesquichloride, while the reaction system was kept at -3°C or below. Stirring was continued for 2 hours at this temperature. The resulting reduce solid was separated at 0°C and washed with purified hexane.

The reduced solid was suspended in n-decalin (0.2 g/cc in concentration) and heat-treated at 140°C for 2 hours. The supernatant liquid was removed and the solids were washed with purified hexane.

A quantity of 1.1 kg of this solid component was suspended in 5.5 liters of toluene, and then iodine and diisoamyl ether were added so that the molar ratio of solid component/iodine/diisoamyl ether is 1/0.1/1.0. After reaction at 80°C for 1 hour, there was obtained a catalyst component.

## Production of Propylene Copolymer

Copolymerization was performed in the same was as in Example 1 except that the catalyst component was replaced with the one obtained in the above-mentioned step. The physical properties of the resulting propylene copolymer are shown in Table 1.

It is noted that the propylene copolymers obtained in Comparative Examples 4 to 6 are poor in physical properties although their composition is within the range specified in this invention. This shows that the object of this invention can be achieved only when the polymerization catalyst of this invention is employed.

## TABLE 1

| | Ethylene content (%) | 1-Butene content (%) | Melt Index (g/10 min) | Bulk density (g/cc) | Hexane solubles (%) | Heat seal temperature (°C) | Anti-blocking properties $(g/cm^2)$ | Stiffness (Young's modulus) $(kg/cm^2)$ |
|---|---|---|---|---|---|---|---|---|
| Example 1 | 2.5 | 4.1 | 9.8 | 0.48 | 5.0 | 128 | 1.5 | 7,200 |
| Example 2 | 1.4 | 4.2 | 9.0 | 0.49 | 3.9 | 136 | 0.2 | 9,400 |
| Example 3 | 1.5 | 5.2 | 7.8 | 0.48 | 4.0 | 133 | 0.7 | 8,200 |
| Example 4 | 2.8 | 3.5 | 10.6 | 0.46 | 5.4 | 130 | 3.0 | 6,600 |
| Example 5 | 1.5 | 7.5 | 7.5 | 0.47 | 4.3 | 126 | 2.5 | 7,200 |
| Example 6 | 1.3 | 9.0 | 8.8 | 0.46 | 4.7 | 120 | 4.5 | 6,000 |
| Example 7 | 0 | 9.5 | 9.2 | 0.49 | 3.0 | 132 | 0.1 | 10,200 |
| Comp. Example 1 | 1.5 | 1.5 | 8.3 | 0.48 | 4.0 | 145 | 0.2 | 10,900 |
| Comp. Example 2 | 2.0 | 12.0 | 9.4 | 0.37 | 13.5 | 121 | 18.5 | 4,500 |
| Comp. Example 3 | 4.3 | 2.5 | 8.8 | 0.36 | 14.0 | 120 | 20.0 | 4,200 |
| Comp. Example 4 | 2.6 | 4.2 | 8.6 | 0.35 | 9.3 | 126 | 15.6 | 5,400 |
| Comp. Example 5 | 1.4 | 4.5 | 7.9 | 0.38 | 7.2 | 135 | 7.3 | 7,100 |
| Comp. Example 6 | 1.5 | 7.5 | 8.3 | 0.42 | 9.2 | 125 | 15.0 | 5,600 |

CLAIMS:

1. A propylene copolymer comprising propylene, 2 to 10 wt % 1-butene and 0 to 4 wt % ethylene, obtained by copolymerizing propylene with 1-butene or copolymerizing propylene with 1-butene and ethylene in the presence of a polymerization catalyst comprising a titanium-containing catalyst component and an organoaluminum cocatalyst, said titanium-containing catalyst component being obtained by contacting $TiCl_4$ with an organometallic compound selected from organoaluminum compounds, organomagnesium compounds and organozinc compounds at temperature in the range of about -50°C to about 30°C in presence of an inert diluent to obtain reduced solids, treating the reduced solids with a complexing agent and a chlorinated hydrocarbon having 2 or more carbon atoms and recovering the treated reduced solids.

2. The propylene copolymer in accordance with claim 1 wherein the propylene copolymer comprises 0.5 to 4 wt % ethylene.

3. The propylene copolymer in accordance with claim 1 wherein the organometallic compound is an organoaluminum compound represented by the formula $AlR_nX_{3-n}$ wherein R is a $C_1-C_{10}$ alkyl group or aryl group, X is halogen atom and $3 \geq n > 0$.

4. The propylene copolymer in accordance with claim 1 wherein the complexing agent is di-n-butyl ether and the chlorinated hydrocarbon is hexachlorolethane.

5. A process for producing a polypropylene copolymer containing 2 to 10 wt % 1-butene and 0 to 4 wt % ethylene, said process comprising copolymerizing propylene with 1-butene or copolymerizing propylene with 1-butene and ethylene in the presence of a polymerization catalyst composed of a titanium-containing catalyst component and an organoaluminum cocatalyst, said titanium-containing catalyst component being obtained by contacting $TiCl_4$ with an organometallic compound selected from organoaluminum compounds, organomagnesium compounds and organozinc compounds at temperatures in the range of about -50°C to about 30°C in the presence of an inert diluent to obtain reduced solids, treating the reduced solids with a complexing agent and a chlorinated hydrocarbon having 2 or more carbon atoms and recovering the treated reduced solids.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | FR-A-2 428 651 (SUMITOMO) <br> * Claims 1,2,6,7,14-18; page 7, lines 21-25; examples 3-5,9 * | 1-5 | C 08 F 210/06 <br> C 08 F 4/64 |
| X | FR-A-2 445 346 (SUMITOMO) <br> * Claims 1,7,11-13,15; page 7, lines 15-19; examples 3,8 * | 1-5 | |
| D,A | US-A-4 182 691 (HIROSHI UENO) <br> * Column 2, lines 50-54 * | 1 | |

TECHNICAL FIELDS SEARCHED (Int. Cl.4)

C 08 F

The present search report has been drawn up for all claims

| Place of search <br> THE HAGUE | Date of completion of the search <br> 03-10-1985 | Examiner <br> DE ROECK R.G. |
|---|---|---|